(19) Europäisches Patentamt
European Patent Office
Office européen des brevets

(11) **EP 4 765 710 A1**

(12) **EUROPEAN PATENT APPLICATION**
published in accordance with Art. 153(4) EPC

(43) Date of publication:
**24.06.2026 Bulletin 2026/26**

(21) Application number: **24870417.3**

(22) Date of filing: **06.09.2024**

(51) International Patent Classification (IPC):
***H04L 5/00*** $^{(2006.01)}$

(52) Cooperative Patent Classification (CPC):
**H04L 5/00; H04W 4/02**

(86) International application number:
**PCT/CN2024/117547**

(87) International publication number:
**WO 2025/066871 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311286559**

(71) Applicant: **HUAWEI TECHNOLOGIES CO., LTD.
Shenzhen 518129 (CN)**

(72) Inventors:
• **ZHANG, Heng
Shenzhen, Guangdong 518129 (CN)**
• **HUANG, Su
Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **COMMUNICATION METHOD AND COMMUNICATION APPARATUS**

(57) This application provides a communication method and a communication apparatus. The method may be applied to the communication field. The method includes: obtaining an association relationship between a first sounding reference signal SRS resource set and a second SRS resource set, where the first SRS resource set and the second SRS resource set are located on different component carriers CCs; and sending a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter. According to the foregoing method, even if transparent precoding exists, measurement performed by a network device on an aggregated SRS sent by a terminal device is not affected. This improves accuracy of positioning the terminal device by a location management function.

FIG. 8

**Description**

This application claims priority to Chinese Patent Application No. 202311286559.0, filed with the China National Intellectual Property Administration on September 27, 2023 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

In the 3rd generation partnership project (3rd generation partnership project, 3GPP) standard release (Release 17, R17), a plurality of positioning technologies such as downlink-time difference of arrival (downlink-time difference of arrival, DL-TDOA), downlink-angle of departure (downlink-angle of departure, DL-AOD), uplink-time difference of arrival (uplink-time difference of arrival, UL-TDOA), uplink-angle of arrival (uplink-angle of arrival, UL-AOA), and multi-round trip time (multi-round trip time, multi-RTT) are supported. The DL-TDOA, UL-TDOA, and multi-RTT algorithms are time-of-arrival-based positioning technologies. To be specific, a receive end needs to measure time of arrival of a signal sent by a transmit end, and then convert the time of arrival into distance information between the receive end and the transmit end, to finally obtain a location of a to-be-positioned target. The DL-AOD and UL-AOA are angle-based positioning technologies. To be specific, a receive end measures an angle of arrival of a reference signal sent by a transmit end, and then infers a receiver location based on angle information of a receiver and a plurality of senders with known locations.

When the foregoing technology is used for positioning, positioning accuracy may be improved by using an aggregated positioning technology. For example, a terminal device may send an aggregated sounding reference signal (sounding reference signal, SRS) in a band by using a contiguously aggregated component carrier (component carrier, CC). Because the aggregated SRS has a larger bandwidth, a network device may obtain a more accurate measurement result by measuring the aggregated SRS.

However, in actual application, the foregoing aggregated positioning technology may be affected by protocol-transparent precoding. As a result, positioning accuracy is affected. The protocol-transparent precoding may be understood as precoding corresponding to an SRS sent by a terminal device side, but a network device side does not know content of the precoding.

**SUMMARY**

This application provides a communication method and a communication apparatus, so that even if transparent precoding exists, measurement performed by a network device on an aggregated SRS sent by a terminal device is not affected. This improves accuracy of positioning the terminal device by a location management function.

According to a first aspect, a communication method is provided. The method includes: obtaining an association relationship between a first sounding reference signal SRS resource set and a second SRS resource set, where the first SRS resource set and the second SRS resource set are located on different component carriers CCs; and sending a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

Optionally, the association relationship between the first SRS resource set and the second SRS resource set may be understood as an aggregation relationship.

Optionally, the foregoing method may be performed by a terminal device.

In this embodiment of this application, the precoding of the first SRS and the precoding of the second SRS are set to be the same, or delay parameters corresponding to the precoding are set to be the same, so that even if transparent precoding exists, measurement performed by a network device on an aggregated SRS sent by the terminal device is not affected. This improves accuracy of positioning the terminal device by a location management function.

With reference to the first aspect, in some implementations of the first aspect, that the first SRS and the second SRS have the same precoding includes: The first SRS and the second SRS have same spatial domain precoding or same frequency domain precoding.

With reference to the first aspect, in some implementations of the first aspect, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

With reference to the first aspect, in some implementations of the first aspect, that the first linear relationship is the same as the second linear relationship includes: A slope of the first linear relationship is the same as a slope of the second linear relationship.

According to a second aspect, a communication method is provided. The method includes: obtaining an association relationship between a first SRS resource set and a second SRS resource set, where the first SRS resource set and the second SRS resource set are located on different CCs; and receiving a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

Optionally, the association relationship between the first SRS resource set and the second SRS resource set may be understood as an aggregation relationship.

Optionally, the foregoing method may be performed by a network device.

In this embodiment of this application, the precoding of the first SRS and the precoding of the second SRS are set to be the same, or delay parameters corresponding to the precoding are set to be the same, so that even if transparent precoding exists, measurement performed by the network device on an SRS sent by a terminal device is not affected. This can improve accuracy of measuring the SRS by the network device, and implement more accurate positioning.

With reference to the second aspect, in some implementations of the second aspect, that the first SRS and the second SRS have the same precoding includes: The first SRS and the second SRS have same spatial domain precoding or same frequency domain precoding.

With reference to the second aspect, in some implementations of the second aspect, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

With reference to the second aspect, in some implementations of the second aspect, that the first linear relationship is the same as the second linear relationship includes: A slope of the first linear relationship is the same as a slope of the second linear relationship.

With reference to the second aspect, in some implementations of the second aspect, the method further includes: determining a first measurement result based on the first SRS and the second SRS, where the first measurement result indicates at least one of the following information corresponding to a reference signal transmitted between a terminal device and a network device: distance information, angle information, power information, velocity information, and Doppler information; and sending the first measurement result to a location management function.

Optionally, the reference signal communicated between the terminal device and the network device may be the first SRS and second SRS before aggregation, or may be a reference signal obtained by aggregating the first SRS and the second SRS.

Optionally, the information corresponding to the reference signal may be specifically at least one of the following content: relative time of arrival (relative time of arrival, RTOA), time of arrival (time of arrival, TOA), angle of arrival (angle of arrival, AOA), reference signal received power (reference signal received power, RSRP), reference signal received path power (reference signal received path power, RSRPP), time of path arrival (relative of path arrival), angle of path arrival (angle of path arrival), reference signal Doppler component (reference signal Doppler component), reference signal path Doppler component (reference signal path Doppler component), and terminal device velocity (UE velocity).

In this embodiment of this application, the network device may measure the first SRS and the second SRS that are sent by the terminal device, to obtain the first measurement result, and send the first measurement result to the location management function for positioning. Because the first SRS and the second SRS have the same precoding or the precoding is determined based on the same delay parameter, accuracy of the first measurement result can be improved, so that a result obtained through positioning by the location management function is more accurate.

With reference to the second aspect, in some implementations of the second aspect, the determining the first measurement result based on the first SRS and the second SRS includes: aggregating the first SRS and the second SRS to obtain a third SRS, where a bandwidth of the third SRS is larger than a bandwidth of the first SRS and a bandwidth of the second SRS; and determining the first measurement result based on the third SRS.

In this embodiment of this application, the network device may aggregate the first SRS and the second SRS to obtain the third SRS with the larger bandwidth, and measure the third SRS to obtain the first measurement result. In this way, because the third SRS has the larger bandwidth than the first SRS and the second SRS, accuracy of the first measurement result may be higher, so that a result obtained through positioning by the location management function is more accurate.

With reference to the second aspect, in some implementations of the second aspect, the first measurement result includes at least one of the following content corresponding to the third SRS: relative time of arrival RTOA, angle of arrival AOA, power information, velocity information, and Doppler information.

According to a third aspect, a communication apparatus is provided. The apparatus includes an obtaining unit and a processing unit, where the obtaining unit is configured to obtain an association relationship between a first SRS resource set and a second SRS resource set, where the first SRS resource set and the second SRS resource set are located on different CCs; and the processing unit is configured to send a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

With reference to the third aspect, in some implementations of the third aspect, that the first SRS and the second SRS have the same precoding includes: The first SRS and the second SRS have same spatial domain precoding or same frequency domain precoding.

With reference to the third aspect, in some implementations of the third aspect, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

With reference to the third aspect, in some implementations of the third aspect, that the first linear relationship is the same as the second linear relationship includes: A slope of the first linear relationship is the same as a slope of the second linear relationship.

According to a fourth aspect, a communication apparatus is provided. The apparatus includes an obtaining unit and a processing unit, where the obtaining unit is configured to obtain an association relationship between a first SRS resource set and a second SRS resource set, where the first SRS resource set and the second SRS resource set are located on different CCs; and the processing unit is configured to receive a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

With reference to the fourth aspect, in some implementations of the fourth aspect, that the first SRS and the second SRS have the same precoding includes: The first SRS and the second SRS have same spatial domain precoding or same frequency domain precoding.

With reference to the fourth aspect, in some implementations of the fourth aspect, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

With reference to the fourth aspect, in some implementations of the fourth aspect, that the first linear relationship is the same as the second linear relationship includes: A slope of the first linear relationship is the same as a slope of the second linear relationship.

With reference to the fourth aspect, in some implementations of the fourth aspect, the apparatus further includes a transceiver unit, where the processing unit is further configured to determine a first measurement result based on the first SRS and the second SRS, where the first measurement result indicates at least one of the following information corresponding to a reference signal transmitted between a terminal device and a network device: distance information, angle information, power information, velocity information, and Doppler information; and the transceiver unit is configured to send the first measurement result to a location management function.

With reference to the fourth aspect, in some implementations of the fourth aspect, the processing unit is specifically configured to: aggregate the first SRS and the second SRS to obtain a third SRS, where a bandwidth of the third SRS is larger than a bandwidth of the first SRS and a bandwidth of the second SRS; and determine the first measurement result based on the third SRS.

According to a fifth aspect, a communication apparatus is provided, including at least one processor and a memory. The at least one processor is coupled to the memory, and is configured to read and execute instructions in the memory, to cause the apparatus to implement the method according to any one of the implementations of the first aspect or the second aspect.

According to a sixth aspect, a computer-readable storage medium is provided. The computer-readable storage medium stores program code, and when the computer program code is run on a computer, the computer is caused to perform the method according to any one of the implementations of the first aspect or the second aspect.

According to a seventh aspect, a chip is provided. The chip includes a circuit, where the circuit is configured to perform the method according to any one of the implementations of the first aspect or the second aspect.

According to an eighth aspect, a computer program product is provided. The computer product includes a computer program. When the computer program is run, a computer is caused to perform the method according to any one of the implementations of the first aspect or the second aspect.

According to a ninth aspect, a terminal device is provided, including the apparatus according to any one of the implementations of the third aspect.

According to a tenth aspect, a network device is provided, including the apparatus according to any one of the implementations of the fourth aspect.

## BRIEF DESCRIPTION OF DRAWINGS

FIG. 1 is a schematic flowchart of uplink-based positioning according to an embodiment of this application;
FIG. 2 is a diagram of trilateration-based positioning according to an embodiment of this application;
FIG. 3 is a diagram of intra-band and inter-band CC distribution according to an embodiment of this application;
FIG. 4 is a schematic flowchart of aggregating positioning reference signals on different CCs according to an embodiment of this application;
FIG. 5 is a diagram of impact of inter-CC phase continuity on ToA estimation according to an embodiment of this application;
FIG. 6 is a diagram of an aggregated estimation error caused by different precoding according to an embodiment of this application;
FIG. 7 is a diagram of a system architecture to which a communication method is applicable according to an embodiment of this application;
FIG. 8 is a schematic flowchart of a communication method according to an embodiment of this application;
FIG. 9 is a schematic flowchart of another communication method according to an embodiment of this application;
FIG. 10 is a diagram of a communication apparatus according to an embodiment of this application; and
FIG. 11 is a diagram of another communication apparatus according to an embodiment of this application.

## DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device (user equipment, UE) in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a future 5G network, or a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (Wideband Code Division Multiple Access, WCDMA) system, may be an evolved NodeB (evolutional NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a future 5G network, a network device in a future evolved PLMN network, or the like. This is not limited in embodiments of this application.

An application scenario of embodiments of this application includes an uplink carrier aggregation positioning scenario, that is, an aggregated SRS positioning scenario, including uplink time difference of arrival positioning and uplink angle of arrival positioning. A main process includes: generation of a positioning request, transmission of resource configuration information, signal transmission and measurement, transmission of measurement information, and the like.

For ease of understanding of embodiments of this application, concepts and technologies used in embodiments of this application are first briefly described.

1. SRS

In one aspect, a network device may estimate a channel state of an uplink channel based on an SRS sent by a terminal device, to schedule the terminal device to perform PUSCH transmission. In another aspect, for a communication system having channel reciprocity, for example, a time division duplex (time division duplex, TDD) system, based on the channel reciprocity, the SRS may also be used by the network device to estimate a channel state of a downlink channel.

2. SRS resource

The SRS resource is a time-frequency resource used to send an SRS signal.

3. SRS resource set

The SRS resource set is a set including one or more SRS resources having some same parameters, for example, subcarrier spacing, same start physical resource block (physical resource block, PRB) and bandwidth, and SRS comb size (comb Size).

4. Uu interface

The Uu interface is a cellular network communication interface, and mainly refers to a communication interface between UE and a base station. The Uu interface includes an uplink and a downlink, and is characterized by implementing reliable communication in a long distance and a wider range.

5. CC

CCs are carriers corresponding to different cells that participate in carrier aggregation.

6. Carrier aggregation

To provide a larger radio channel bandwidth, a plurality of contiguous or non-contiguous carriers are aggregated to form a larger bandwidth, so as to meet a higher data rate or measurement requirement.

7. Cramer-Rao lower bound

The Cramer-Rao lower bound is a theoretical bound used to measure accuracy of parameter estimation, that is, a theoretical minimum value of a ToA estimation error. An actual ToA measurement estimation error may only approach the lower bound infinitely, and is not less than the lower bound.

8. Cyclic delay diversity (cyclic delay diversity, CDD)

The cyclic delay diversity is a simple method for obtaining diversity gains. Different delayed copies of a to-be-sent signal are transmitted on different antennas, so that diversity gains are obtained at a receive end.

The following describes technical problems to be resolved in this application and technical solutions used in this application.

In a 3GPP standard release R17, a plurality of positioning technologies such as DL-TDOA, DL-AOD, UL-TDOA, UL-AOA, and multi-RTT are supported. The DL-TDOA, UL-TDOA, and multi-RTT algorithms are time-of-arrival-based positioning technologies. To be specific, a receive end needs to measure time of arrival of a signal sent by a transmit end, and then convert the time of arrival into distance information between the receive end and the transmit end, to finally obtain a location of a to-be-positioned target. The DL-AOD and UL-AOA are angle-based positioning technologies. To be specific, a receive end measures an angle of arrival of a reference signal sent by a transmit end, and then infers a receiver location based on angle information of a receiver and a plurality of senders with known locations.

The following uses the UL-TDOA technology as an example to briefly describe a positioning procedure.

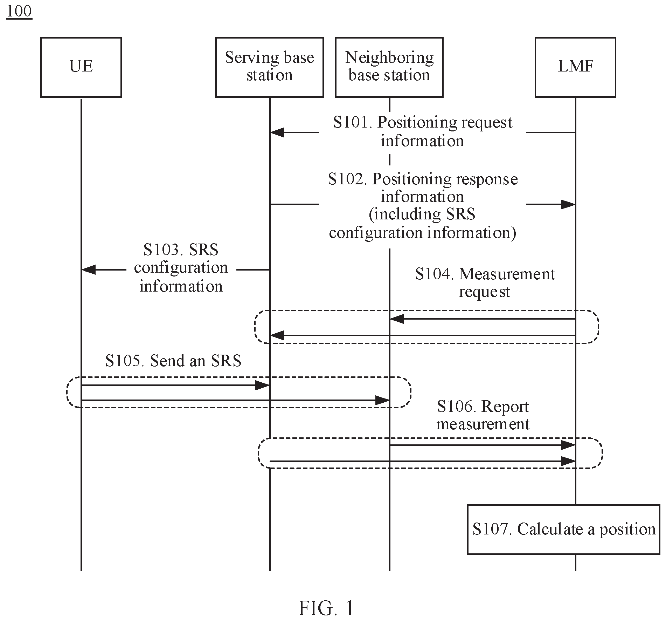

For an uplink-based solution, an uplink reference signal needs to be measured on a base station side. For example, time of arrival of an SRS sent by UE is measured. A measurement process generally includes the following steps. First, a location management function (location management function, LMF) sends positioning request information to a serving base station, and the base station feeds back positioning response information (including SRS configuration information) to the LMF, and sends the SRS configuration information to the UE. Then, the LMF indicates the SRS configuration information to another base station (for example, a neighboring base station). Then, the LMF sends a measurement request to a base station (including the serving base station and the neighboring base station), and after receiving the indication of the LMF, the base station starts to receive the SRS sent by the UE, and measures the time of arrival of the SRS. Then, the base station reports a result obtained through measurement to the location management function (LMF). Finally, the location management function uses received measurement information to estimate a location. A specific process may be shown in FIG. 1.

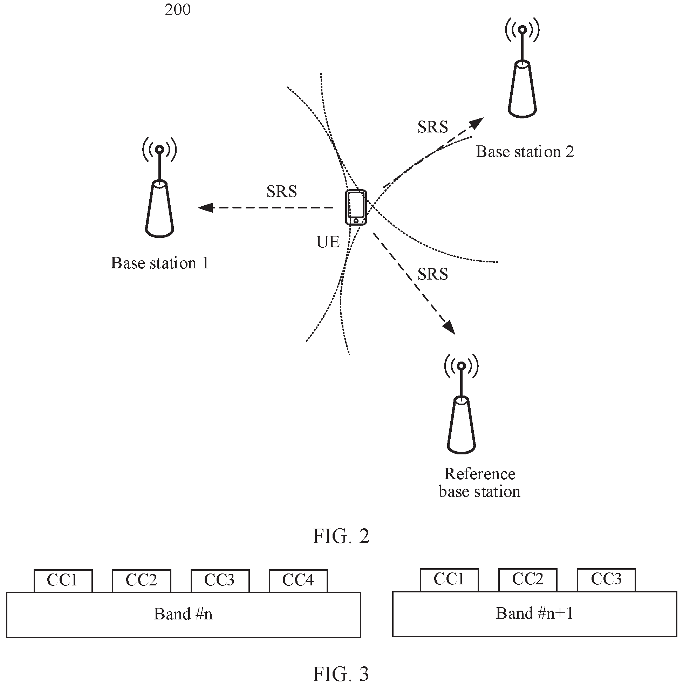

With reference to FIG. 2, the following specifically describes a method for calculating a location of a to-be-positioned target by an LMF by using a UL-TDOA technology.

As shown in FIG. 2, it is assumed that locations of three base stations are known. Herein, coordinates of an $i^{th}$ base station are defined as $(x_i, y_i)$, coordinates of the to-be-positioned target are defined as $(x_{UE}, y_{UE})$, and a $1^{st}$ base station is used as a reference base station. Assuming that time of arrival of SRSs measured by the other two base stations is $t_i$, a time difference of arrival between any base station and the reference base station is $\Delta t_{i1}$. According to a definition of a hyperbola (where distances to two fixed points is a constant), if a target is located on a hyperbola with two base stations as foci, the following system of equations may be established:

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \quad (1),$$

and

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \quad (2)$$

In the foregoing two equations, c is a velocity of light. Because there are only two unknown numbers ($x_{UE}, y_{UE}$), location coordinates of target UE may be obtained by jointly solving equation (1) and equation (2). In practice, due to existence of a measurement error, the foregoing equations usually have no closed-form solution. Accordingly, an optimization algorithm like a least square algorithm or a particle swarm filter algorithm may be used to estimate an optimal solution of the foregoing equations.

It can be learned from the foregoing descriptions that, to implement positioning, a basic condition is that a terminal device needs to send a positioning reference signal (for example, an SRS), and a base station measures the positioning reference signal, to obtain distance information or angle information of the terminal device and the base station at a same moment or in a same time period, so as to calculate a location of the terminal device. For the foregoing trilateration positioning or triangulation positioning (including DL-TDOA, UL-TDOA, DL-AOD, and UL-AOA), distance information or angle information of a plurality of terminal devices and a base station needs to be obtained at the same time. Therefore, multi-cell or multi-site measurement needs to be performed. Due to frequency reuse between networking, a signal of a single cell generally can cover only one cell to suppress inter-cell interference. To ensure measurement quality of a neighboring cell during positioning measurement, the foregoing positioning reference signal is introduced, so that the positioning reference signal can cover a plurality of cells, and multi-cell or multi-site measurement quantities are obtained, so as to complete the trilateration or triangulation positioning.

For uplink trilateration positioning, a base station may measure, based on a received positioning reference signal, air propagation time, that is, time of arrival (time of arrival, ToA), for a signal to arrive at the base station, to obtain a TDoA between different sites, so as to complete the trilateration positioning. It is clear that positioning accuracy is positively correlated with measurement accuracy of the ToA. With reference to an estimation theory and characteristics of a transmission system using an orthogonal frequency division multiplexing (orthogonal frequency division multiplexing, OFDM) technology, it may be obtained that a Cramer-Rao lower bound of a mean square error of ToA estimation is:

$$CRB_\tau = \frac{3}{SNR} * \frac{c^2}{2\pi^2 B^2}$$

*SNR* is a signal-to-noise ratio of the received positioning reference signal, c is a velocity of light, and *B* is a bandwidth occupied by the positioning reference signal in frequency domain. It can be learned from the foregoing formula that, a ToA estimation error is negatively correlated with the bandwidth of the positioning reference signal. A larger bandwidth indicates a smaller lower bound of the error and higher ToA estimation accuracy.

Therefore, a manner of improving ToA estimation accuracy is to increase the bandwidth corresponding to the positioning reference signal. According to a specific rule in the 3GPP, an entire radio spectrum is divided, from low to high, into bands each corresponding to a specific spectrum range. In a range of FR-1, a maximum bandwidth of a single carrier is 100 MHz. To obtain a larger bandwidth to send a positioning reference signal, so as to improve ToA estimation accuracy, the current 3GPP standard R18 supports sending of a positioning reference signal using intra-band contiguous carrier aggregation. As shown in FIG. 3, for two-carrier aggregation, only aggregation of CC1 and CC2 is supported, and aggregation of CC1 and CC3 is not supported because CC1 and CC3 are intra-band non-contiguous CCs. Similarly, aggregation of a CC in a band #n and a CC in a band #n+1 is not supported because the CC in the band #n and the CC in the band #n+1 are CCs in different bands.

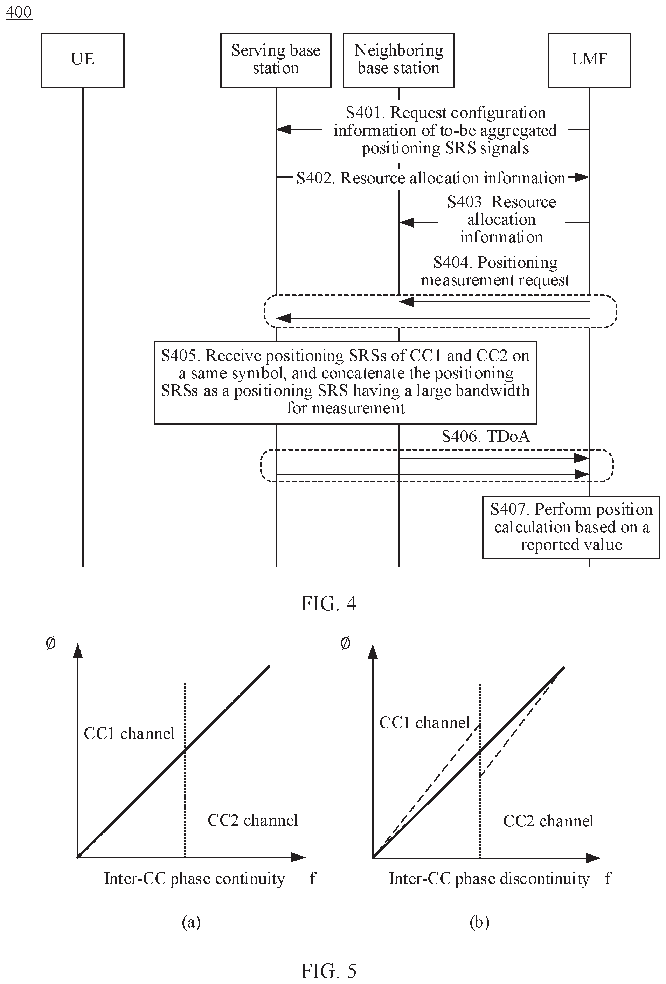

As shown in FIG. 4, uplink aggregation of CC1 and CC2 is used as an example. In the current R18, aggregation of positioning reference signals on different CCs is as follows:

S401. An LMF sets a configuration of uplink to-be-aggregated positioning reference signals (where an SRS is used as an uplink positioning reference signal), including an aggregation association relationship between uplink SRS resource sets, sends the configuration to a serving base station, and requests configuration information of to-be-aggregated positioning SRS signals.

S402. The serving base station receives the request from the LMF, allocates, on a same time symbol, a positioning SRS resource to a user on to-be-aggregated CC1 and CC2, and reports resource allocation information to the LMF.

S403. The LMF forwards the resource allocation information to another base station (including a neighboring base station in FIG. 4) receiving an uplink positioning SRS.

S404. The LMF initiates a positioning measurement request to a base station (including the serving base station and the neighboring base station) participating in positioning measurement.

S405. The base station participating in the positioning measurement receives positioning SRSs of CC1 and CC2 on a same symbol, and the base station concatenates the positioning SRSs as one positioning SRS having a large bandwidth for measurement, to obtain a ToA measurement value in a case of a larger bandwidth, so that ToA estimation accuracy is higher.

S406. The base station participating in positioning converts ToA into a TDoA, and reports the TDoA to the LMF.

S407. The LMF performs position calculation based on a reported value.

To ensure accuracy of measurement of two concatenated CC channels in step S405, phase continuity between the two CCs is required. FIG. 5 shows phase-frequency characteristic curves of CC channels. The ToA is a slope corresponding to the phase-frequency characteristic curve in the figure. As shown in (a) in FIG. 5, when CC1 and CC2 are phase-continuous at a connection point, phase-frequency characteristic curves of CC1 and CC2 are on a same line segment, and ToA estimation accuracy is high. When CC1 and CC2 are phase-discontinuous at a connection point, as shown in (b) in FIG. 5, ToA estimated based on CC1 and CC2 is shown by a solid line, and there is an error between a slope of the ToA and a slope (shown by dashed lines) corresponding to real ToA. Therefore, it can be learned that accuracy of TOA obtained through aggregation-based estimation is reduced due to phase discontinuity between CCs. To ensure accuracy of measurement of two concatenated CC channels, phase continuity between the two CCs is required.

However, in a current intra-band contiguous aggregation positioning technology, only phase continuity between CCs needs to be ensured, and impact of protocol-transparent precoding of an SRS on positioning is not considered (where protocol-transparency may mean that specific content of the precoding is not exchanged through protocol signaling, and it may be understood as that a base station side does not know content of precoding corresponding to an SRS sent by a UE side).

Assuming that SRS signals on CC1 and CC2 are $S_{SRS1}$ and $S_{SRS2}$ respectively, and protocol-transparent precoding quantities of the SRS signals are $w_1$ and $w_2$ respectively, actually sent SRS signals are $X_{SRS1} = w_1 S_{SRS1}$ and $X_{SRS2} = w_2 S_{SRS2}$ respectively. Assuming that SRS signals on two CCs received by a terminal device are $Y_{SRS1}$ and $Y_{SRS2}$ respectively, correspondingly obtained channel estimation results are $\hat{H}_{SRS1} = \frac{Y_{SRS1}}{X_{SRS1}} = \frac{H_{SRS1}}{w_1}$ and

$\hat{H}_{SRS2} = \frac{Y_{SRS2}}{X_{SRS2}} = \frac{H_{SRS2}}{w_2}$ respectively. It is clear that, when precoding for sending an SRS exists, a channel observed at a receive side is a combination of an actual channel and the precoding. Therefore, positioning accuracy is affected by the precoding.

For example, when $x_{SRS1} = w_1 s_{SRS1} = \frac{1}{\sqrt{N}} \begin{bmatrix} 1 \\ e^{-j2\pi\Delta f \tau_1} \\ \vdots \\ e^{-j2\pi\Delta f \tau_1 (N-1)} \end{bmatrix} s_{SRS1}$ and

$x_{SRS2} = w_2 s_{SRS2} = \frac{e^{-j2\pi\Delta f \tau_1 N}}{\sqrt{N}} \begin{bmatrix} 1 \\ e^{-j2\pi\Delta f \tau_2} \\ \vdots \\ e^{-j2\pi\Delta f \tau_2 (N-1)} \end{bmatrix} s_{SRS2}$, cyclic delay precoding with two different delays $\tau_1$

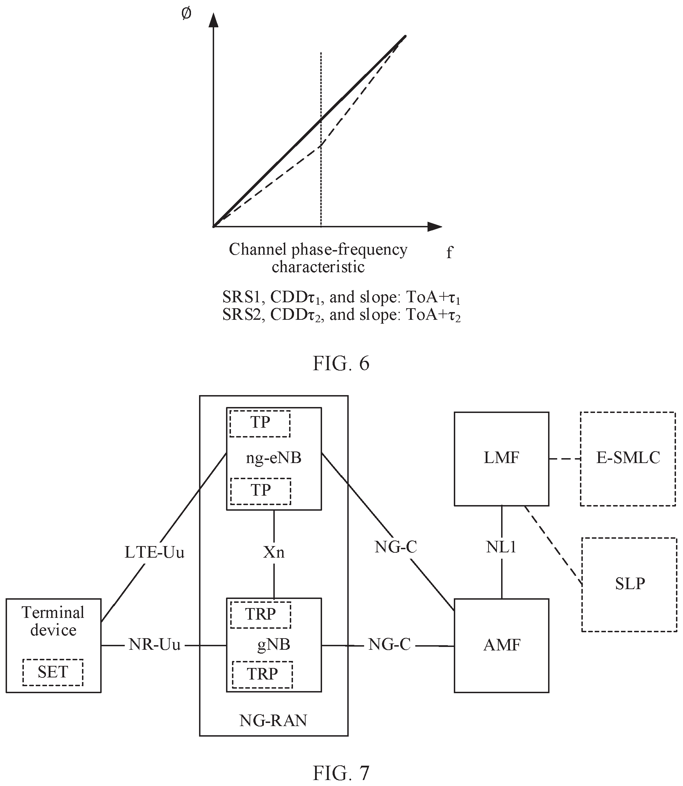

and $\tau_2$ are respectively applied to SRS1 and SRS2. Because $\tau_1$ and $\tau_2$ are different, the channel observed at the receive side changes differently, and consequently aggregated estimation accuracy is reduced. As shown in FIG. 6, because slopes of phase-frequency curves (shown as dashed lines) corresponding to SRS1 and SRS2 are different, aggregated estimation accuracy is reduced during aggregation.

Therefore, in the current intra-band contiguous aggregation positioning technology, because a relationship of precoding between aggregated SRSs is not considered, there is a deviation between SRS measurements on different CCs in positioning measurement. As a result, an additional ToA measurement error is introduced, and positioning accuracy is reduced.

Embodiments of this application provide a communication method and a communication apparatus, to improve accuracy of positioning a terminal device when transparent precoding exists.

FIG. 7 is a diagram of a system architecture to which a communication method is applicable according to an embodiment of this application.

As shown in FIG. 7, in the diagram of the architecture, a terminal device is connected to a radio access network through an LTE-Uu interface and/or an NR-Uu interface via an ng-eNB and a gNB separately. The radio access network is connected to a core network through an NG-C interface via an access and mobility management function (access and mobility management function, AMF) unit. A next-generation radio access network (next-generation radio access network, NG-RAN) includes one or more ng-eNBs. The NG-RAN may alternatively include one or more gNBs. The NG-RAN may alternatively include one or more ng-eNBs and gNBs. The ng-eNB communicates with the gNB through an Xn interface. The ng-eNB is an LTE access network device accessing a 5G core network, and the gNB is a 5G access network device accessing the 5G core network. The core network includes units such as an AMF and an LMF (or an evolved serving mobile location center (evolved serving mobile location center, E-SMLC)). The AMF is configured to implement a function like access management. The LMF (or the E-SMLC) is configured to implement a function like positioning. The AMF is connected to the LMF through an NL1 interface. The LMF is an apparatus or component deployed in the core network to provide a positioning function for the terminal device.

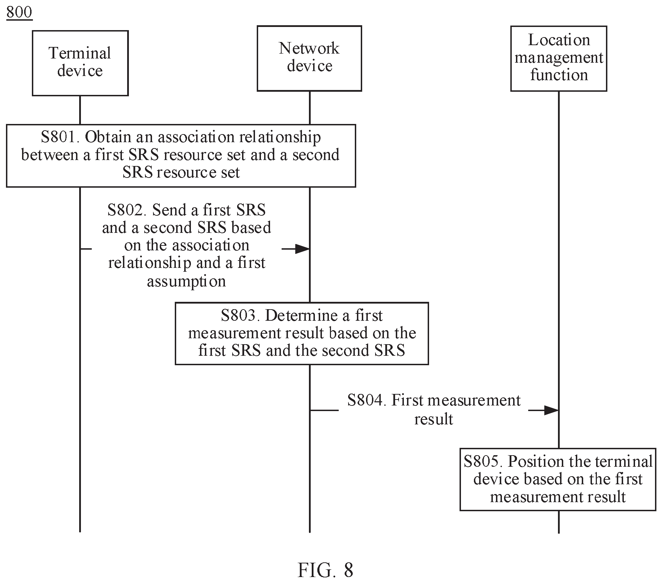

FIG. 8 is a schematic flowchart of a communication method according to an embodiment of this application. The method may include step S801 to step S805.

S801. A terminal device and a network device obtain an association relationship between a first SRS resource set and a second SRS resource set.

The first SRS resource set and the second SRS resource set may be located on different CCs.

Optionally, the association relationship between the first SRS resource set and the second SRS resource set may be understood as an aggregation relationship.

Optionally, the terminal device and the network device may obtain the association relationship between the first SRS resource set and the second SRS resource set from a location management function.

S802. The terminal device sends a first SRS and a second SRS to the network device based on the association relationship and a first assumption.

The first SRS may belong to the first SRS resource set, and the second SRS may belong to the second SRS resource set. The first assumption may be that the first SRS and the second SRS have same precoding, or the first assumption may be that precoding corresponding to the first SRS and precoding corresponding to the second SRS are determined based on a same delay parameter.

In an embodiment, that the first SRS and the second SRS have the same precoding includes: The first SRS and the second SRS have same spatial domain precoding or same frequency domain precoding.

In an embodiment, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

Optionally, that the first linear relationship is the same as the second linear relationship may be understood as: A slope of the first linear relationship is same as a slope of the second linear relationship.

It should be understood that, in this embodiment of this application, the network device and a base station may refer to a same concept.

S803. The network device determines a first measurement result based on the first SRS and the second SRS.

The first measurement result may indicate at least one of the following information corresponding to a reference signal transmitted between the terminal device and the network device: distance information, angle information, power information, velocity information, and Doppler information.

Optionally, the first measurement result specifically includes at least one of the following content: RTOA, TOA, AOA, RSRP, RSRPP, time of path arrival, angle of path arrival, reference signal Doppler component, reference signal path Doppler component, or terminal device velocity.

Optionally, the reference signal transmitted between the terminal device and the network device may be the first SRS and second SRS before aggregation, or may be a reference signal obtained by aggregating the first SRS and the second SRS.

In an embodiment, step S803 includes: The network device aggregates the first SRS and the second SRS to obtain a third SRS, where a bandwidth of the third SRS is larger than a bandwidth of the first SRS and a bandwidth of the second SRS; and the network device determines the first measurement result based on the third SRS. In this way, because the third SRS has the larger bandwidth than the first SRS and the second SRS, accuracy of the first measurement result may be higher, so that a result obtained through positioning by the location management function is more accurate.

Optionally, in this embodiment, the first measurement result may include at least one of the following content corresponding to the third SRS: relative time of arrival RTOA, angle of arrival AOA, power information, velocity information, and Doppler information.

S804. The network device sends the first measurement result to the location management function.

S805. The location management function positions the terminal device based on the first measurement result.

Specifically, the location management function may position the terminal device according to the method described in FIG. 2 and the text part thereof, and details are not described herein again.

In this embodiment of this application, the precoding of the first SRS and the precoding of the second SRS are set to be the same, or delay parameters corresponding to the precoding are set to be the same, so that even if transparent precoding exists, measurement performed by the network device on an SRS sent by the terminal device is not affected. This can improve accuracy of positioning the terminal device by the location management function.

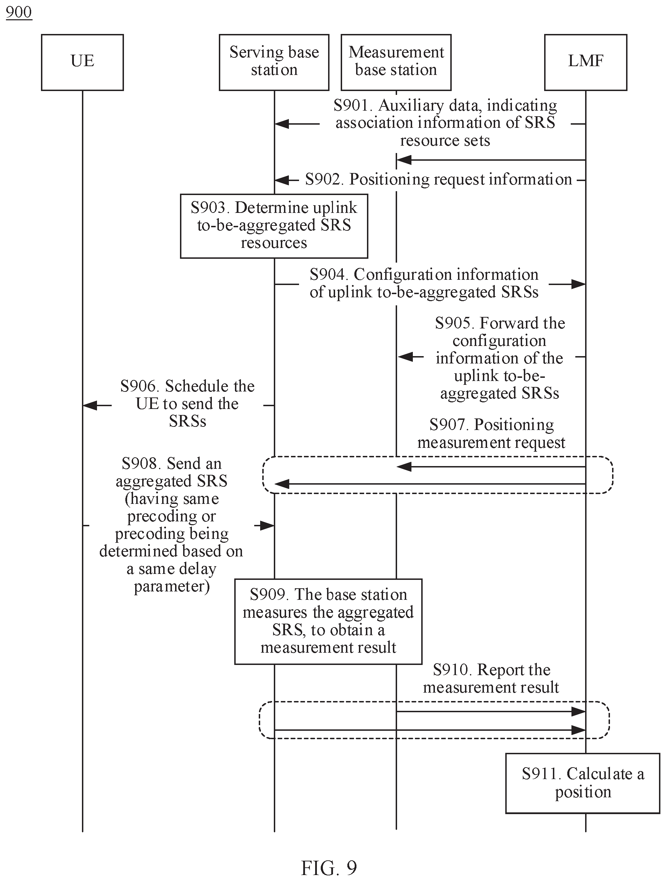

FIG. 9 is a schematic flowchart of another communication method according to an embodiment of this application. The method 900 may be detailed descriptions of the steps in the method 800.

S901. An LMF sends auxiliary data to a base station (including a serving base station and a measurement base station).

The auxiliary data may indicate an aggregation association relationship between SRS resource sets, that is, indicate specific SRS sets in which resources can be aggregated for sending.

S902. The LMF sends positioning request information to the serving base station.

The positioning request information is used to request the serving base station to feed back information of to-be-aggregated SRSs.

S903. The serving base station determines uplink to-be-aggregated SRS resources.

Specifically, the serving base station may schedule the to-be-aggregated SRS resources for the UE based on the association relationship between the SRS resource sets received in step S901.

S904. The serving base station feeds back configuration information of uplink to-be-aggregated SRSs to the LMF.

S905. The LMF sends the received configuration information of the uplink to-be-aggregated SRSs to the measurement base station.

S906. The serving base station schedules the UE to send the SRSs.

Optionally, step S906 may alternatively be performed before step S904.

S907. The LMF sends a positioning measurement request to the serving base station and the measurement base station.

S908. The UE scheduled by the serving base station sends an aggregated SRS.

The aggregated SRS may be the third SRS in the method 800.

Optionally, the aggregated SRS may be sent according to the first assumption in the method 800, that is, precoding in the aggregated SRS is the same or precoding is determined based on a same delay parameter.

Optionally, that the precoding in the aggregated SRS is the same or the precoding is determined based on the same delay parameter may be understood as: The aggregated SRS includes a first SRS and a second SRS, and precoding of the first SRS and precoding of the second SRS are the same or are determined based on a same delay parameter.

S909. The base station (including the serving base station and the measurement base station) measures the aggregated SRS, to obtain a measurement result.

The measurement result may be the first measurement result in the method 800.

S910. The base station (including the serving base station and the measurement base station) reports the measurement result to the LMF.

S911. The LMF calculates a location of the UE based on the measurement result.

The LMF may position the UE according to the method described in FIG. 2 and the text part thereof, and details are not described herein again.

In this embodiment of this application, the UE may send the aggregated SRS to a network device. Because the precoding in the aggregated SRS is the same or the precoding is determined based on the same delay parameter, even if transparent precoding exists, measurement performed by the base station on the SRS sent by the UE is not affected. This improves accuracy of positioning performed by the LMF.

The following specifically describes a specific implementation in which the first SRS and the second SRS have the same spatial domain precoding in the method 800 and the method 900.

It is assumed that there are M transmit antennas on a UE side, where M is a positive integer. After SRS signals on two CCs are generated, a function of the spatial domain precoding is to select which antennas are used to send different SRS signals, and determine a weight of coding corresponding to the antenna. Assuming that original SRS signals are $S_{SRS1}$ and $S_{SRS2}$, and spatial domain precoding quantities of the original SRS signals are $w_1$ and $w_2$ respectively, $X_{SRS1} = w_1 S_{SRS1}$, and $X_{SRS2} = w_2 S_{SRS2}$, $w_1 = [w_{11}, w_{12}, \cdots, w_{1M}]^T$, and $w_2 = [w_{21}, w_{22}, \cdots, w_{2M}]^T$. If an element in a precoding vector or matrix is 0, it indicates that an antenna corresponding to the precoding element does not send the SRS signal. If the element is not 0, it indicates that the antenna sends the corresponding SRS signal, and an element value is a transmit weight. $S_{SRS1}$ may be understood as the first SRS in the method 800, and $S_{SRS2}$ may be understood as the second SRS in the method 800.

In this implementation, spatial domain precoding matrices or vectors of SRS1 and SRS2 may be set to be completely consistent, in other words, SRS1 and SRS2 should be sent via a same antenna, and weight values corresponding to different SRSs are pairwise the same. For example, the foregoing parameters are set as M = 4 and

$$w_1 = \left[0, \frac{1}{2}, 0, \frac{\sqrt{3}}{2}\right]^T = w_2 = \left[0, \frac{1}{2}, 0, \frac{\sqrt{3}}{2}\right]^T$$, indicating that both SRS1 and SRS2 are sent via antenna 2 and antenna 4, and when SRS1 and SRS2 are sent, transmit weights on transmit antennas are the same.

In this embodiment of this application, SRSs are sent via a same antenna, and transmit weights corresponding to the antennas are the same, so that it can be ensured that frequency-domain subcarriers on a concatenated channel corresponding to the aggregated SRSs received at the base station have phase continuity and phase change consistency, to ensure measurement accuracy of positioning.

The following describes a specific implementation in which the precoding of the first SRS and the precoding of the second SRS are determined based on the same delay parameter in the method 800 and the method 900.

It is assumed that frequency domain signals of to-be-aggregated SRS1 and SRS2 are $S_{SRS1} = [s_{11}, s_{12}, \cdots, s_{1N}]^T$ and $S_{SRS2} = [s_{11}, s_{22}, \cdots, s_{2N}]^T$. $S_{SRS1}$ may be understood as the first SRS in the method 800, and $S_{SRS2}$ may be understood as the second SRS in the method 800.

Frequency domain precoding may be understood as multiplying an SRS signal in frequency domain by a weight. Assuming that frequency domain precoding matrices or vectors corresponding to SRS1 and SRS2 are $w_1 = [w_{11}, w_{12}, \cdots, w_{1N}]^T$ and $w_2 = [w_{21}, w_{22}, \cdots, w_{2N}]^T$ respectively,

SRS signals obtained through frequency domain precoding are respectively

$$X_{SRS1} = [w_{11}s_{11}, w_{12}s_{12}, \cdots, w_{1N}s_{1N}]^T,$$

and

$$X_{SRS2} = [w_{21}s_{21}, w_{22}s_{22}, \cdots, w_{2N}s_{2N}]^T$$

Because ToA corresponds to a slope of a channel frequency domain phase-frequency curve, for the frequency domain precoding, consistency of a frequency domain phase on the channel should not be disrupted. For example, assuming that a frequency domain precoding manner is cyclic delay diversity precoding (to be specific, a transmit delay of a channel is increased through precoding), a CDD precoding matrix delay parameter corresponding to SRS1 is $\tau_1$, and

$$w_1 = \frac{1}{\sqrt{N}}\left[1, e^{-j2\pi\Delta f \tau_1}, \cdots, e^{-j2\pi\Delta f \tau_1(N-1)}\right]^T$$, and a CDD precoding matrix delay parameter corresponding to

SRS2 is $\tau_2$, and $w_2 = \dfrac{e^{-j2\pi\Delta f\tau_1 N}}{\sqrt{N}}\left[1, e^{-j2\pi\Delta f\tau_2}, \cdots, e^{-j2\pi\Delta f\tau_2(N-1)}\right]^T$.

As shown in FIG. 6 and the corresponding text part, in this case, a slope of a phase-frequency curve corresponding to a channel H1 corresponding to SRS1 is ToA + $\tau_1$, and a slope of a phase-frequency curve corresponding to a channel H2 corresponding to SRS2 is ToA + $\tau_2$. Therefore, to ensure aggregated estimation accuracy, frequency domain precoding matrices of SRS1 and SRS2 should meet that $\tau_1 = \tau_2$, to be specific, delay parameters in the precoding matrices are the same, and frequency parameters (elements in $w_1$ and $w_2$ matrices) sequentially increase according to subcarrier frequencies of the two SRSs. In other words, $w_1$ and $w_2$ meet the following relationship:

$$w_1 = \frac{1}{\sqrt{N}}\left[1, e^{-j2\pi\Delta f\tau}, \cdots, e^{-j2\pi\Delta f\tau(N-1)}\right]^T,$$

and

$$w_2 = \frac{1}{\sqrt{N}}\left[e^{-j2\pi\Delta f\tau N}, e^{-j2\pi\Delta f\tau(N+1)}, \cdots, e^{-j2\pi\Delta f\tau(2N-1)}\right]^T$$

For zero-delay (zero-delay) frequency domain precoding, to be specific, the frequency domain precoding may not introduce an additional delay, for example, only a common phase value may be added in frequency domain. In this case, it should be ensured that $w_1 = w_2$.

In this embodiment of this application, the delay parameters in the precoding matrices are set to be the same, so that it can be ensured that frequency-domain subcarriers on a concatenated channel corresponding to the aggregated SRSs received by the base station have phase continuity and phase change consistency, to ensure measurement accuracy of aggregated positioning.

It should be understood that, in embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

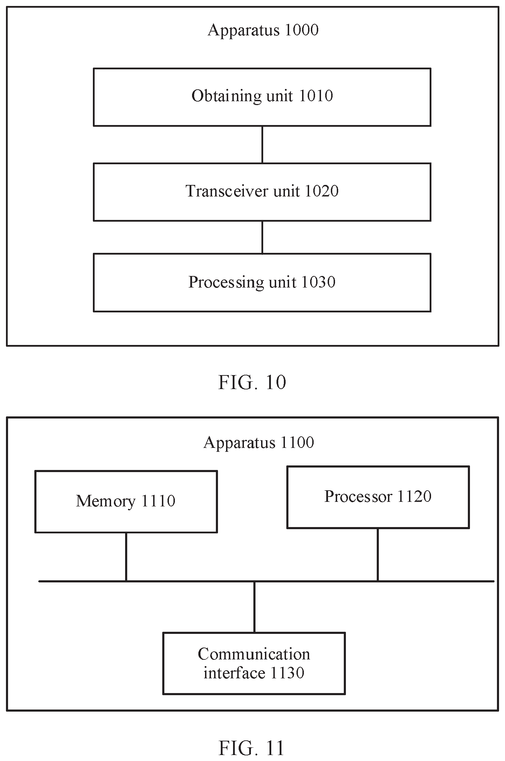

FIG. 10 is a diagram of a communication apparatus 1000 according to an embodiment of this application. The apparatus 1000 may include an obtaining unit 1010, a transceiver unit 1020, and a processing unit 1030. The obtaining unit 1010 is configured to obtain instructions and/or data, and the transceiver unit 1020 is configured to receive/send corresponding instructions and/or data. The obtaining unit 1010 and the transceiver unit 1020 may also be referred to as a communication interface or a communication unit. The processing unit 1030 is configured to perform data processing, to cause the apparatus 1000 to implement the foregoing communication method.

Optionally, the apparatus 1000 may further include a storage unit, configured to implement a corresponding storage function, and to store corresponding instructions and/or data.

In a design, the apparatus 1000 may be configured to perform an action performed by the terminal device in the foregoing method embodiments.

The apparatus 1000 includes the obtaining unit 1010 and the processing unit 1030. The obtaining unit 1010 is configured to obtain an association relationship between a first SRS resource set and a second SRS resource set, where the first SRS resource set and the second SRS resource set are located on different CCs. The processing unit 1030 is configured to send a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

Optionally, the processing unit 1030 is specifically configured to control, based on the association relationship and the first assumption, the transceiver unit 1020 to send the first SRS and the second SRS.

In a possible implementation, that the first SRS and the second SRS have the same precoding includes: The first SRS and the second SRS have same spatial domain precoding or same frequency domain precoding.

In a possible implementation, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

In a possible implementation, that the first linear relationship is the same as the second linear relationship includes: A slope of the first linear relationship is the same as a slope of the second linear relationship.

In a design, the apparatus 1000 may be configured to perform an action performed by the network device or the base station in the foregoing method embodiments.

The apparatus 1000 includes the obtaining unit 1010 and the processing unit 1030. The obtaining unit 1010 is configured to obtain an association relationship between a first SRS resource set and a second SRS resource set, where the first SRS resource set and the second SRS resource set are located on different CCs. The processing unit 1030 is configured to receive a first SRS and a second SRS based on the association relationship and a first assumption, where the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

Optionally, the processing unit 1030 is specifically configured to control, based on the association relationship and the first assumption, the transceiver unit 1020 to receive the first SRS and the second SRS.

In a possible implementation, that the first SRS and the second SRS have the same precoding includes: The first SRS and the second SRS have same spatial domain precoding or same frequency domain precoding.

In a possible implementation, that the precoding corresponding to the first SRS and the precoding corresponding to the second SRS are determined based on the same delay parameter includes: Phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

In a possible implementation, that the first linear relationship is the same as the second linear relationship includes: A slope of the first linear relationship is the same as a slope of the second linear relationship.

In a possible implementation, the apparatus further includes the transceiver unit 1020. The processing unit 1030 is further configured to determine a first measurement result based on the first SRS and the second SRS, where the first measurement result indicates at least one of the following information corresponding to a reference signal transmitted between the terminal device and the network device: distance information, angle information, power information, velocity information, and Doppler information; and the transceiver unit 1020 is configured to send the first measurement result to a location management function.

In a possible implementation, the processing unit 1030 is specifically configured to: aggregate the first SRS and the second SRS to obtain a third SRS, where a bandwidth of the third SRS is larger than a bandwidth of the first SRS and a bandwidth of the second SRS; and determine the first measurement result based on the third SRS.

FIG. 11 is a diagram of another communication apparatus 1100 according to an embodiment of this application.

The apparatus 1100 includes a memory 1110, a processor 1120, and a communication interface 1130. The memory 1110, the processor 1120, and the communication interface 1130 are connected to each other through an internal connection path. The memory 1110 is configured to store instructions. The processor 1120 is configured to execute the instructions stored in the memory 1110, to control the communication interface 1130 to obtain information, or to cause the apparatus 1100 to perform the foregoing communication method. Optionally, the memory 1110 may be coupled to the processor 1120 through an interface, or may be integrated with the processor 1120.

It should be noted that the communication interface 1130 uses a transceiver apparatus, for example, but not limited to, a transceiver. The communication interface 1130 may further include an input/output interface (input/output interface).

The processor 1120 stores one or more computer programs. The one or more computer programs include instructions. When the instructions are run by the processor 1120, the apparatus 1100 is caused to perform the communication method in the foregoing embodiments.

In an implementation process, steps in the foregoing methods may be completed by a hardware integrated logical circuit in the processor 1120 or by using instructions in a form of software. The method disclosed with reference to embodiments of this application may be directly performed and completed by a hardware processor, or may be performed and completed by using a combination of hardware and a software module in the processor. The software module may be located in a mature storage medium in the art, for example, a random access memory, a flash memory, a read-only memory, a programmable read-only memory, an electrically erasable programmable memory, or a register. The storage medium is located in the memory 1110. The processor 1120 reads information in the memory 1110 and completes the steps in the foregoing methods in combination with hardware of the processor 1120. To avoid repetition, details are not described herein again.

Optionally, the communication interface 1130 in FIG. 11 may implement the obtaining unit 1010 or the transceiver unit 1020 in FIG. 10. The processor 1120 in FIG. 11 may implement the processing unit 1030 in FIG. 10.

An embodiment of this application further provides a computer-readable storage medium. The computer-readable storage medium stores program code. When the computer program code is run on a computer, the computer is caused to perform any method in FIG. 1 to FIG. 9.

An embodiment of this application further provides a computer program product. The computer product includes a computer program. When the computer program is run, a computer is caused to perform any method in FIG. 1 to FIG. 9.

An embodiment of this application further provides a chip, including a circuit. The circuit is configured to perform any method in FIG. 1 to FIG. 9.

An embodiment of this application further provides a terminal device, including any communication apparatus in FIG. 10 or FIG. 11.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a portable hard drive, a read-only memory (Read-Only Memory, ROM), a random access memory (Random Access Memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   obtaining an association relationship between a first sounding reference signal SRS resource set and a second SRS resource set, wherein the first SRS resource set and the second SRS resource set are located on different component carriers CCs; and
   sending a first SRS and a second SRS based on the association relationship and a first assumption, wherein the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

2. The method according to claim 1, wherein that the first SRS and the second SRS have the same precoding comprises:
   the first SRS and the second SRS have same spatial domain precoding or same frequency domain precoding.

3. The method according to claim 1 or 2, wherein that the precoding corresponding to the first SRS and the precoding corresponding to the second SRS are determined based on the same delay parameter comprises:
phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

4. The method according to claim 3, wherein that the first linear relationship is the same as the second linear relationship comprises:
a slope of the first linear relationship is the same as a slope of the second linear relationship.

5. A communication method, wherein the method comprises:

    obtaining an association relationship between a first SRS resource set and a second SRS resource set, wherein the first SRS resource set and the second SRS resource set are located on different CCs; and
    receiving a first SRS and a second SRS based on the association relationship and a first assumption, wherein the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

6. The method according to claim 5, wherein that the first SRS and the second SRS have the same precoding comprises:
the first SRS and the second SRS have same spatial domain precoding or same frequency domain precoding.

7. The method according to claim 5 or 6, wherein that the precoding corresponding to the first SRS and the precoding corresponding to the second SRS are determined based on the same delay parameter comprises:
phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

8. The method according to claim 7, wherein that the first linear relationship is the same as the second linear relationship comprises:
a slope of the first linear relationship is the same as a slope of the second linear relationship.

9. The method according to any one of claims 5 to 8, wherein the method further comprises:

    determining a first measurement result based on the first SRS and the second SRS, wherein the first measurement result indicates at least one of the following information corresponding to a reference signal transmitted between a terminal device and a network device: distance information, angle information, power information, velocity information, and Doppler information; and
    sending the first measurement result to a location management function.

10. The method according to claim 9, wherein the determining the first measurement result based on the first SRS and the second SRS comprises:

    aggregating the first SRS and the second SRS to obtain a third SRS, wherein a bandwidth of the third SRS is larger than a bandwidth of the first SRS and a bandwidth of the second SRS; and
    determining the first measurement result based on the third SRS.

11. The method according to claim 10, wherein the first measurement result comprises at least one of the following content corresponding to the third SRS: relative time of arrival RTOA, angle of arrival AOA, power information, velocity information, and Doppler information.

12. A communication apparatus, wherein the apparatus comprises an obtaining unit and a processing unit, wherein

    the obtaining unit is configured to obtain an association relationship between a first SRS resource set and a second SRS resource set, wherein the first SRS resource set and the second SRS resource set are located on different CCs; and

the processing unit is configured to send a first SRS and a second SRS based on the association relationship and a first assumption, wherein the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

13. The apparatus according to claim 12, wherein that the first SRS and the second SRS have the same precoding comprises:

the first SRS and the second SRS have same spatial domain precoding or same frequency domain precoding.

14. The apparatus according to claim 12 or 13, wherein that the precoding corresponding to the first SRS and the precoding corresponding to the second SRS are determined based on the same delay parameter comprises:

phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

15. The apparatus according to claim 14, wherein that the first linear relationship is the same as the second linear relationship comprises:

a slope of the first linear relationship is the same as a slope of the second linear relationship.

16. A communication apparatus, wherein the apparatus comprises an obtaining unit and a processing unit, wherein

the obtaining unit is configured to obtain an association relationship between a first SRS resource set and a second SRS resource set, wherein the first SRS resource set and the second SRS resource set are located on different CCs; and

the processing unit is configured to receive a first SRS and a second SRS based on the association relationship and a first assumption, wherein the first SRS belongs to the first SRS resource set, the second SRS belongs to the second SRS resource set, and the first assumption is that the first SRS and the second SRS have same precoding, or the first assumption is that precoding corresponding to the first SRS and precoding corresponding to the second SRS are determined based on a same delay parameter.

17. The apparatus according to claim 16, wherein that the first SRS and the second SRS have the same precoding comprises:

the first SRS and the second SRS have same spatial domain precoding or same frequency domain precoding.

18. The apparatus according to claim 16 or 17, wherein that the precoding corresponding to the first SRS and the precoding corresponding to the second SRS are determined based on the same delay parameter comprises:

phases and frequencies of elements in the frequency domain precoding corresponding to the first SRS are in a first linear relationship, phases and frequencies of elements in the frequency domain precoding corresponding to the second SRS are in a second linear relationship, and the first linear relationship is the same as the second linear relationship.

19. The apparatus according to claim 18, wherein that the first linear relationship is the same as the second linear relationship comprises:

a slope of the first linear relationship is the same as a slope of the second linear relationship.

20. The apparatus according to any one of claims 16 to 19, wherein the apparatus further comprises a transceiver unit, wherein

the processing unit is further configured to determine a first measurement result based on the first SRS and the second SRS, wherein the first measurement result indicates at least one of the following information corresponding to a reference signal transmitted between a terminal device and a network device: distance information, angle information, power information, velocity information, and Doppler information; and

the transceiver unit is configured to send the first measurement result to a location management function.

21. The apparatus according to claim 20, wherein

the processing unit is specifically configured to:

aggregate the first SRS and the second SRS to obtain a third SRS, wherein a bandwidth of the third SRS is larger than a bandwidth of the first SRS and a bandwidth of the second SRS; and
determine the first measurement result based on the third SRS.

22. The apparatus according to claim 21, wherein the first measurement result comprises at least one of the following content corresponding to the third SRS: relative time of arrival RTOA, angle of arrival AOA, power information, velocity information, and Doppler information.

23. A communication apparatus, comprising a processor and a memory, wherein the processor is coupled to the memory, and is configured to read and execute instructions in the memory, to perform the method according to any one of claims 1 to 4.

24. A communication apparatus, comprising a processor and a memory, wherein the processor is coupled to the memory, and is configured to read and execute instructions in the memory, to perform the method according to any one of claims 5 to 11.

25. A computer-readable storage medium, wherein the computer-readable storage medium stores program code, and when the computer program code is run on a computer, the computer is caused to perform the method according to any one of claims 1 to 11.

26. A chip, comprising a circuit, wherein the circuit is configured to perform the method according to any one of claims 1 to 11.

27. A terminal device, comprising the apparatus according to any one of claims 12 to 15.

28. A network device, comprising the apparatus according to any one of claims 16 to 22.

100

FIG. 1

200

SRS

Base station 2

SRS

Base station 1

UE

SRS

Reference
base station

FIG. 2

| CC1 | CC2 | CC3 | CC4 |
|-----|-----|-----|-----|

Band #n

| CC1 | CC2 | CC3 |
|-----|-----|-----|

Band #n+1

FIG. 3

400

| UE | Serving base station | Neighboring base station | LMF |
|---|---|---|---|

S401. Request configuration information of to-be aggregated positioning SRS signals

S402. Resource allocation information

S403. Resource allocation information

S404. Positioning measurement request

S405. Receive positioning SRSs of CC1 and CC2 on a same symbol, and concatenate the positioning SRSs as a positioning SRS having a large bandwidth for measurement

S406. TDoA

S407. Perform position calculation based on a reported value

FIG. 4

Ø

CC1 channel

CC2 channel

Inter-CC phase continuity    f

(a)

Ø

CC1 channel

CC2 channel

Inter-CC phase discontinuity    f

(b)

FIG. 5

Channel phase-frequency
characteristic

SRS1, CDD$\tau_1$, and slope: ToA+$\tau_1$
SRS2, CDD$\tau_2$, and slope: ToA+$\tau_2$

FIG. 6

FIG. 7

800

```
┌──────────┐          ┌──────────┐              ┌────────────┐
│ Terminal │          │ Network  │              │  Location  │
│  device  │          │  device  │              │ management │
│          │          │          │              │  function  │
└────┬─────┘          └────┬─────┘              └─────┬──────┘
```

┌─────────────────────────────────────────┐
│ S801. Obtain an association relationship  │
│ between a first SRS resource set and a    │
│ second SRS resource set                   │
└─────────────────────────────────────────┘

S802. Send a first SRS
and a second SRS based
on the association
relationship and a first
assumption

┌───────────────────────────────────┐
│ S803. Determine a first            │
│ measurement result based on the    │
│ first SRS and the second SRS       │
└───────────────────────────────────┘

S804. First measurement
result

┌────────────────────────────────┐
│ S805. Position the terminal     │
│ device based on the first       │
│ measurement result              │
└────────────────────────────────┘

FIG. 8

900

```
     UE          Serving base    Measurement         LMF
                    station      base station
      │               │              │                │
      │               │   S901. Auxiliary data, indicating
      │               │◀──────── association information of SRS ──┤
      │               │            resource sets                  │
      │               │              │                │
      │               │◀─────────────────────────────◀┤
      │               │◀── S902. Positioning request information ─┤
      │    ┌──────────────────────┐  │                │
      │    │ S903. Determine uplink│  │                │
      │    │ to-be-aggregated SRS  │  │                │
      │    │      resources        │  │                │
      │    └──────────────────────┘  │                │
      │               │  S904. Configuration information          │
      │               ├─── of uplink to-be-aggregated SRSs ──────▶│
      │               │              │                │
      │               │              │  S905. Forward the         │
      │               │              │    configuration           │
      │               │              │◀── information of the ─────┤
      │               │              │     uplink to-be-          │
      │  S906. Schedule the          │    aggregated SRSs         │
      │◀── UE to send the ───────────┤                │
      │        SRSs   │              │  S907. Positioning         │
      │               │              │  measurement request       │
      │  S908. Send an │ ┌ ─ ─ ─ ─ ─ ─ ─ ─ ─ ─ ─ ◀ ─ ─ ─ ─ ┐
      │  aggregated SRS│ │                │               │
      │  (having same  │ │◀──────────────────────────────┤ │
      │    precoding or│ └ ─ ─ ─ ─ ─ ─ ─ ─ ─ ─ ─ ─ ─ ─ ─ ─ ┘
      │  precoding being├─▶             │                │
      │  determined based on           │                │
      │   a same delay │ ┌──────────────────────┐        │
      │    parameter)  │ │ S909. The base station│        │
      │               │ │ measures the aggregated│        │
      │               │ │  SRS, to obtain a     │        │
      │               │ │  measurement result   │        │
      │               │ └──────────────────────┘        │
      │               │              │  S910. Report the          │
      │               │              │  measurement result        │
      │               │ ┌ ─ ─ ─ ─ ─ ─ ─ ─ ─ ─ ─ ─ ▶ ─ ─ ─ ┐
      │               │ │            │                   │
      │               │ │────────────────────────────────▶ │
      │               │ └ ─ ─ ─ ─ ─ ─ ─ ─ ─ ─ ─ ─ ─ ─ ─ ─ ┘
      │               │              │    ┌──────────────────┐
      │               │              │    │ S911. Calculate a│
      │               │              │    │     position     │
      │               │              │    └──────────────────┘
      │               │              │                │
```

FIG. 9

Apparatus 1000

Obtaining unit 1010

Transceiver unit 1020

Processing unit 1030

FIG. 10

Apparatus 1100

Memory 1110

Processor 1120

Communication
interface 1130

FIG. 11

## INTERNATIONAL SEARCH REPORT

| International application No. |
| --- |
| **PCT/CN2024/117547** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC：H04L,H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CJFD: 不同, 相同, 同样, 同一, 对应, 关联, 映射, 假设, 时延, 延迟, 延时, 预编码, 探测参考信号, 载波, 载波分量, 资源, different, same, one, associate, relate, mapping, presum+, hypothesis, suppos+, delay, pre w cod+, SRS, first, second, CC, carrier?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112771812 A (QUALCOMM INC.) 07 May 2021 (2021-05-07) description, paragraphs [0035]-[0117] | 1-28 |
| A | CN 112823484 A (QUALCOMM INC.) 18 May 2021 (2021-05-18) entire document | 1-28 |
| A | WO 2021147061 A1 (QUALCOMM INC.) 29 July 2021 (2021-07-29) entire document | 1-28 |
| A | CN 113543326 A (VIVO COMMUNICATION TECHNOLOGY CO., LTD.) 22 October 2021 (2021-10-22) entire document | 1-28 |
| A | QUALCOMM INC. "Discussion on SRS enhancement" *R1-2009255, 3GPP TSG-RAN WG1 Meeting #103-e*, 13 November 2020 (2020-11-13), entire document | 1-28 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 November 2024** | **22 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/117547**

| Patent document cited in search report | | | Publication date (day/month/year) | Patent family member(s) | | | Publication date (day/month/year) |
|---|---|---|---|---|---|---|---|
| CN | 112771812 | A | 07 May 2021 | US | 2020112970 | A1 | 09 April 2020 |
| | | | | WO | 2020072213 | A1 | 09 April 2020 |
| | | | | EP | 3861660 | A1 | 11 August 2021 |
| CN | 112823484 | A | 18 May 2021 | WO | 2020077536 | A1 | 23 April 2020 |
| | | | | IN | 202127010391 | A | 13 August 2021 |
| | | | | EP | 3868049 | A1 | 25 August 2021 |
| | | | | US | 2021351827 | A1 | 11 November 2021 |
| WO | 2021147061 | A1 | 29 July 2021 | None | | | |
| CN | 113543326 | A | 22 October 2021 | WO | 2021209027 | A1 | 21 October 2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311286559